(19) Europäisches Patentamt
European Patent Office
Office européen des brevets

(11) Publication number: 0 015 745 B1

# (12) EUROPEAN PATENT SPECIFICATION

(45) Date of publication of patent specification: 22.06.83

(51) Int. Cl.³: C 07 C 161/00, A 01 N 47/24

(21) Application number: 80300668.3

(22) Date of filing: 05.03.80

## (54) Pesticidal carbamoyl sulfides, and preparation and use thereof.

(30) Priority: 06.03.79 US 18293

(43) Date of publication of application: 17.09.80 Bulletin 80/19

(45) Publication of the grant of the patent: 22.06.83 Bulletin 83/25

(84) Designated Contracting States: AT BE CH DE FR GB IT LU NL SE

(56) References cited: FR - A - 2 333 787

(73) Proprietor: E.I. DU PONT DE NEMOURS AND COMPANY
Legal Department 1007 Market Street
Wilmington Delaware 19898 (US)

(72) Inventor: Cheng, Jiin-Duey
1206 Crestover Road Graylyn Crest
Wilmington Delaware 19803 (US)

(74) Representative: Hildyard, Edward Martin et al,
Frank B. Dehn & Co. Imperial House 15-19
Kingsway
London WC2B 6UZ (GB)

EP 0 015 745 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Pesticidal carbamoyl sulfides, and preparation and use thereof

This invention relates to pesticidal carbamate derivatives, of interest for the control of arthropods and nematodes.

Insecticidal carbamates are known in the prior art, e.g.

a) Belgian BE 848,912 discloses pesticidal symmetrical bis-N-substituted carbamyl sulfides of the formula

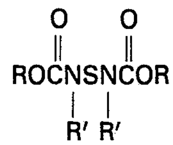

where R and R′ represent substituents of varying scope;

b) Belgian BE 848,913 discloses pesticidal unsymmetrical bis carbamyl sulfides of the formula

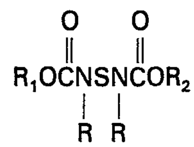

where R, $R_1$ and $R_2$ represent substituents of varying scope;

c) German DT 2,813,281 discloses pesticidal bis-carbamoyl-oximino-disulfides of the formula

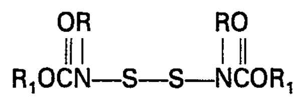

where R and $R_1$ represent substituents of varying scope.

## Summary of the invention

This invention relates to novel compounds of Formula I, to agriculturally useful compositions of these compounds and to the method of use of these compounds to control arthropods and nematodes.

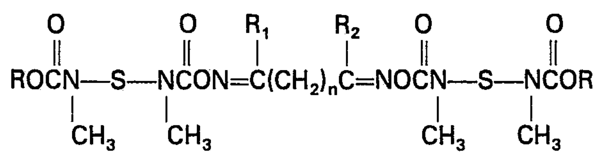

(I)

wherein

R is

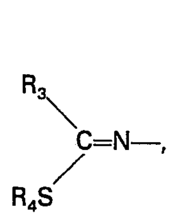

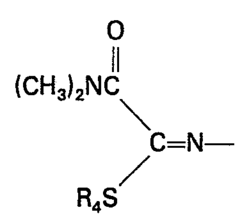

or

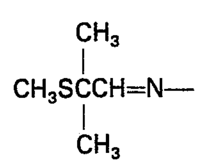

$R_1$ is hydrogen, $C_1$—$C_4$ alkyl, $C_5$—$C_6$ cycloalkyl, $C_1$—$C_3$ alkylthio, chlorine, chloromethyl,

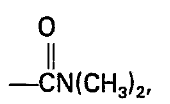 $R_5SCH_2$—, 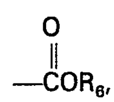

phenyl or phenyl substituted with $C_1$—$C_4$ alkyl;

$R_2$ is hydrogen, $C_1$—$C_4$ alkyl, $C_5$—$C_6$ cycloalkyl, chlorine, $C_1$—$C_3$ alkylthio, phenyl or phenyl substituted with $C_1$—$C_4$ alkyl;

$R_1$ and $R_2$ can be taken together to form a carbocyclic bridge of three to five carbon atoms, or a bridge of the formula $—SCH_2CH_2S—$;

$R_3$ is $C_1—C_3$ alkyl;
$R_4$ is $C_1—C_3$ alkyl;
$R_5$ is $C_1—C_3$ alkyl;
$R_6$ is $C_1—C_6$ alkyl; and
n is 0, 1 or 2;

provided that n is 0 when:

1) $R_1$ is chloromethyl or $R_5SCH_2$, or

2) when $R_1R_2$ is taken together to form a carbocyclic bridge or a bridge of the formula $—SCH_2CH_2S—$, or

3) when at least one of $R_1$ and $R_2$ is alkylthio.

and provided that when n is 0, one of $R_1$ and $R_2$ cannot be H when the other is phenyl or phenyl substituted with $C_1—C_4$ alkyl;

and further provided that when n is 1,

$R_1$ and $R_2$ cannot both be t-butyl, phenyl, phenyl substituted with $C_1—C_4$ alkyl or any combination thereof.

Detailed description of the invention

Preferred compounds

Preferred for their high activity and/or favorable cost are compounds of Formula I wherein

$R_3$ is $CH_3$; or

$R_1$ and $R_2$ are independently hydrogen, $C_1—C_4$ alkyl,

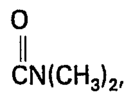

phenyl, phenyl substituted with $C_1—C_4$ alkyl, or where $R_1$ and $R_2$ are taken together to form a carbocyclic bridge of three to five carbon atoms, or

n is 0.

More preferred for their higher activity and/or more favorable cost are compounds of Formula I wherein

$R_1$ and $R_2$ are independently hydrogen or $C_1—C_4$ alkyl; and

n is 0; provided at least one of $R_1$ and $R_2$ is other than hydrogen.

Specifically preferred for their excellent activity and/or most favorable cost are

dimethyl N,N′-[2,3-butanediylidenebis[nitrilooxycarbonyl(N-methylimino)thio(N-methylimino)-carbonyloxy]]bis[ethanimidothioate]

dimethyl N,N′-[1,2-propanediylidenebis[nitrilooxycarbonyl(N-methylimino)thio(N-methylimino)-carbonyloxy]]bis[ethanimidothioate]

dimethyl N,N′-[2,4-pentanediylidenebis[nitrilooxycarbonyl(N-methylimino)thio(N-methylimino)carbonyloxy]]bis[ethanimidothioate]

dimethyl N,N′-[2,5-hexanediylidenebis[nitrilooxycarbonyl(N-methylimino)thio(N-methylimino)carbonyloxy]]bis[ethanimidothioate]

Synthesis

The novel compounds of Formula I can be prepared by the reaction shown in Equation A.

Equation A

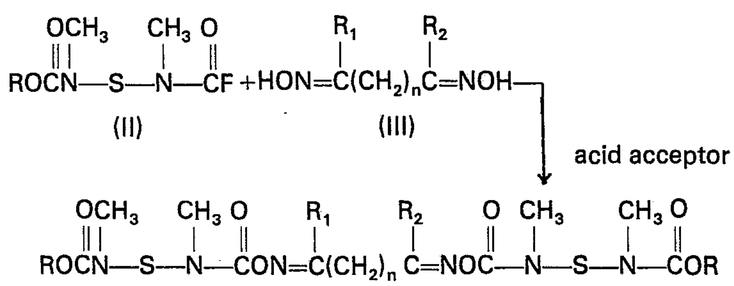


(II) (III)

(I)

wherein

R, $R_1$, $R_2$ and n are as previously defined.

The reaction can be carried out in an inert solvent such as acetonitrile, tetrahydrofuran, toluene, xylene, methylene chloride, chloroform and the like at temperatures between −20° and 80°C, preferably, at −5° to 40°C. The acid acceptor used in this reaction can be an organic tertiary amine such as triethylamine, N,N-dimethylaniline, pyridine, and the like.

The reaction of a dioxime (III) and the carbamoyl fluoride (II) can be carried out in a heterogeneous system such as toluene-water, methylene chloride-water mixture and the like in the presence of a quaternary ammonium or phosphonium salt as a phase transfer catalyst at −15°C to 60°C. An equivalent or a slight excess of metal hydroxide can be used as acid scavenger. It is preferred that the reaction be conducted at 10°C to 30°C by using sodium hydroxide or potassium hydroxide as acid acceptor in the presence of 10 to 30 mole percent of phase transfer catalyst such as cetyltrimethylammonium bromide or benzyltrimethylammonium hydroxide.

The reaction can also be carried out in the absence of acid acceptor by directly reacting the carbamyl fluoride of Formula II with a dianion of the compound of Formula III in an aprotic solvent such as tetrahydrofuran, toluene, acetonitrile, methylene chloride and the like at temperatures between −50° and 40°C, preferably, at −30° to 25°C. The dianion of Formula III is preferably generated *in situ* by reaction of the dioxime III with a metal (e.g. alkali metal) hydride or amide in an aprotic solvent. The reaction of the carbamyl fluoride of Formula II with a dianion of the compound of Formula III may instead be carried out in a water/immiscible organic solvent mixture, in the presence of a phase transfer catalyst.

An alternate method to prepare the compounds of Formula I is shown by Equation B.

Equation B

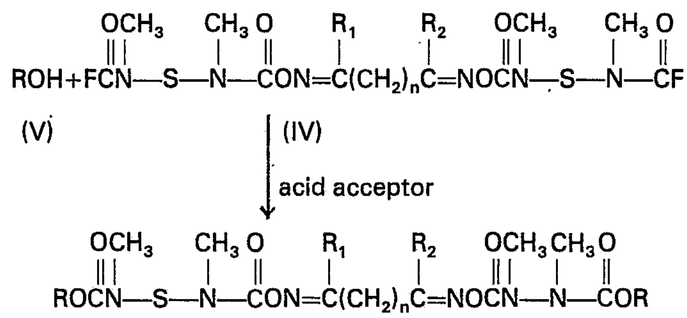


(I)

wherein

R, $R_1$, $R_2$ and n are as previously defined.

The compounds of Formula I can be obtained by treatment of the bis carbamyl fluoride of Formula IV with either the metal (e.g. alkali metal) salt of an oxime of Formula V or the oxime of Formula V itself in the presence of an organic tertiary amine as an acid acceptor under the conditions described previously. The metal salt of an oxime of Formula V as previously described can be generated and used *in situ* by reaction of the oxime with metal hydride in an aprotic solvent, e.g. tetrahydrofuran, toluene, acetonitrile, etc., at −5° to 20°C.

Required intermediates of Formula IV can be prepared by the reaction as given in Equation C.

Equation C

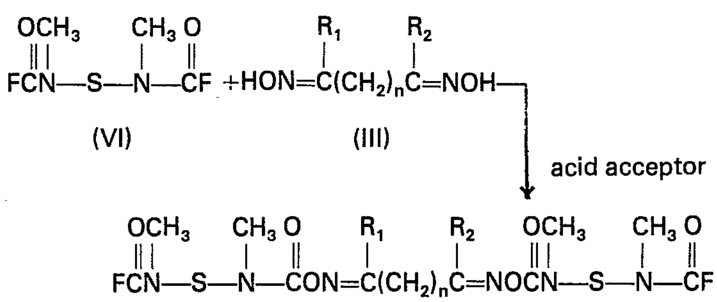


(IV)

The reaction shown in Equation C can be carried out in an inert solvent such as toluene, xylene, tetrahydrofuran, acetonitrile, methylene chloride at temperatures between −20° and 80°C, preferably, at −5° to 40°C. An organic tertiary amine such as triethylamine N,N-dimethylaniline, or pyridine or an inorganic metal bicarbonate or carbonate can be used as an acid acceptor.

The carbamyl fluoride of Formula II and bis(N-methyl-N-fluorocarbonylamino)sulfide (VI) can be prepared by the methods taught in DT 2654282.

In the above reaction procedures, pressure is not critical, but, for convenience, atmospheric pressure is preferred.

The preparation of compounds of Formula I can be more clearly illustrated by the following examples. All temperatures are in degrees centigrade and all percentages are by weight unless otherwise stated.

Example 1

Dimethyl N,N′-[2,3-butanediylidenebis[nitrilooxycarbonyl(N-methylimino)thio(N-methylimino)carbonyloxy]]bis[ethanimidothioate]

Two grams of dimethylglyoxime disodium salt octahydrate was added in portions to a solution of 3.7 g of O-[N-methyl-N-(N′-methyl-N′-fluorocarbonylaminosulfenyl)carbamoyl]-1-methylthioacetaldoxime in 30 ml of dry tetrahydrofuran (THF) at temperatures below −20°C. The mixture was stirred on an ice bath for 3 hours after the addition. Then ether and water were added into the reaction mixture. The precipitate was collected by filtration, washed with water, acetone and air-dried to give 2.6 g of dimethyl N,N′-[2,3-butanediylidenebis[nitrilooxycarbonyl(N-methylimino)thio(N-methylimino)carbonyloxy]]bis[ethanimidothioate], m.p. 204—206°C.

Example 2

Dimethyl N,N′-[1,2-propanediylidenebis[nitrilooxycarbonyl(N-methylimino)thio(N-methylimino)carbonyloxy]]bis[ethanimidothioate]

In a flask was charged 1 g of 50% of sodium hydride dispersed in mineral oil. Mineral oil was removed by washing the hydride with dry hexane under nitrogen atmosphere and hexane solution was decanted. Then 20 ml. of dry THF was added. To the suspension 0.9 g of methylglyoxime was added in portions at temperatures below 20°C. After stirring for 1 hour, a solution of 5 g of O-[N-methyl-N-(N′-methyl-N′-fluorocarbonylaminosulfenyl)carbamoyl]-1-methylthioacetaldoxime in 30 ml. of dry THF was added rapidly at −20 to −30°C. The mixture was stirred on an ice bath for an hour. Then ether was added. Excess of sodium hydride was quenched by careful addition of water. The precipitate was collected by filtration, washed with water, hexane and air-dried to give 2.5 g of dimethyl N,N′-[1,2-propanediylidenebis[nitrilooxycarbonyl(N-methylimino)thio(N-methylimino)carbonyloxy]]bis[ethanimidothioate], m.p. 175—178°C (dec.).

Example 3

Dimethyl N,N′-[ethanediylidenebis[nitrilooxycarbonyl(N-methylimino)thio(N-methylimino)carbonyloxy]]bis[ethanimidothioate]

A solution of 1.5 g of triethylamine in 10 ml. of dry acetonitrile was added dropwise to a mixture of 0.6 g. of glyoxime and 3.9 g of O-[N-methyl-N-(N′-methyl-N′-fluorocarbonylaminosulfenyl)carbamoyl]-1-methylthioacetaldoxime in 30 ml. of dry acetonitrile on an ice bath with stirring. The mixture was allowed to warm up slowly and stirred at ambient temperature for 17 hours. The precipitate was collected by filtration, washed with water, acetonitrile and air-dried to give 1 g of dimethyl N,N′-[ethanediylidenebis[nitrilooxycarbonyl(N-methylimino)thio[N-methylimino)carbonyloxy]]-bis[ethanimidothioate], m.p. 167—168.5°C (dec.).

Example 4

N,N′-[2,3-butanediylidenbis[nitrilooxycarbonyl(N-methylimino)thio]]bis[N-methylcarbamic fluoride]

A solution of 4.1 g of triethylamine in 10 ml of dry acetonitrile was added dropwise to a mixture of 2.3 g of dimethylgloxime and 7.4 g of bis(N-methyl-N-fluorocarbonylamino)sulfide in 40 ml of dry acetonitrile at 0° to 5°C. The mixture was stirred on an ice bath for 30 minutes and at ambient temperature for 3 hours. To the suspension, water and ether were added. The precipitate was collected by filtration, washed with water, a mixture of ether and n-chlorobutane, and air-dried to give 6 g of N,N′-[2,3-butanediylidenebis[nitrilooxycarbonyl(N-methylimino)thio]]bis[N-methylcarbamic fluoride], m.p. 212—215°C (dec.).

Example 4—A

A solution of 5.5 g of O-[N-methyl-N-(N′-methyl-N′-fluorocarbonylaminosulfenyl)carbamoyl]-1-methylthioacetaldoxime in a mixture of 40 ml of toluene and 20 ml of tetrahydrofuran was added dropwise in 5 min. to a mixture of 3 g of dimethylglyoxime disodium salt octahydrate and 1 g of cetyltrimethylammonium bromide in 50 ml of water at 15°C to 20°C with vigorous stirring.

After stirring at room temperature for 30 minutes, the solid was collected by filtration, washed with water, toluene, and air-dried to give 2.6 g of dimethyl N,N′-[2,3-butanediylidenebis[nitrilooxycarbonyl(N-methylimino)thio(N-methylimino)carbonyloxy]]-bis[ethanimidothioate], m.p. 187—193°C (dec.).

Active compounds of Formula I that can be prepared according to the procedures demonstrated by the above examples are given, but not restricted, as follows:

TABLE 1

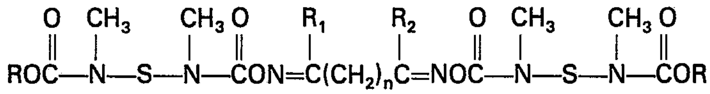

| R | $R_1$ | $R_2$ | n | physical properties |
|---|---|---|---|---|
| 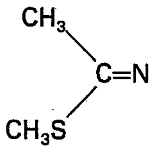 | $CH_3$ | $CH_3$ | 1 | m.p. 131—140°C (dec.) |
| 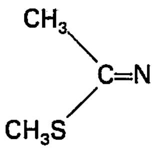 | $C_6H_5$ | $C_6H_5$ | 0 | m.p. 214—216.5°C (dec.) |
| 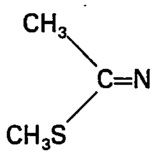 | 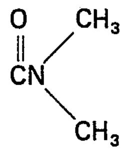 | $CH_3$ | 0 | m.p. 184—189°C (dec.) |
| 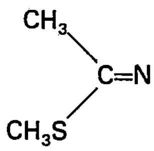 | $CH_3$ | $CH_3$ | 2 | m.p. 178—188°C |
| 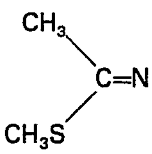 | Cl | Cl | 0 | m.p. 96—99.5°C |
| 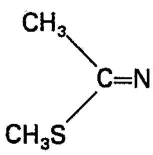 | $CH_3S$ | $CH_3S$ | 0 | m.p.200—202.5°C (dec.) |
| 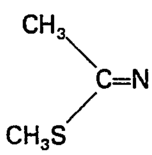 | $CO_2CH_3$ | $CH_3$ | 0 | |
| 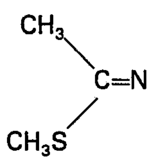 | $CO_2C_6H_{13}$ | $CH_3$ | 0 | |
| 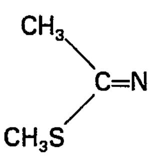 | 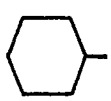 | 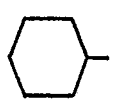 | 0 | |

(TABLE 1, continued)

| R | $R_1$ | $R_2$ | n | physical properties |
|---|---|---|---|---|
| 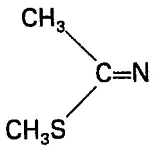 | n—$C_3H_7S$ | n—$C_3H_7S$ | 0 | |
| 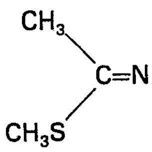 | $CH_3SCH_2$— | $CH_3$ | 0 | oil |
| 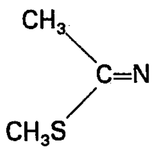 | n—$C_3H_7SCH_2$— | $CH_3$ | 0 | |
| 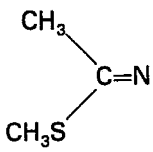 | $ClCH_2$ | $CH_3$ | 0 | mp 166—168.5°C (dec) |
| 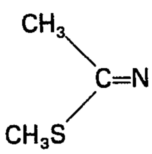 | n—$C_4H_9$ | n—$C_4H_9$ | 0 | |
| 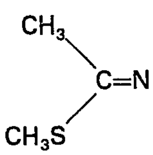 | 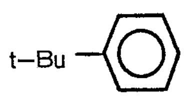 | 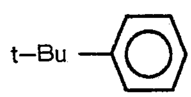 | 0 | |
| 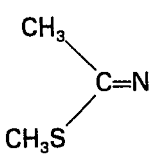 | t-Bu | $CH_3S$ | 0 | |
| 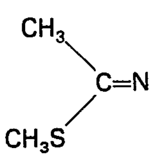 | t-Bu | H | 0 | |
| 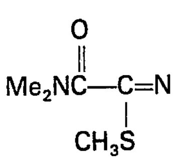 | $CH_3$ | $CH_3$ | 0 | mp 185—188°C (dec) |
| 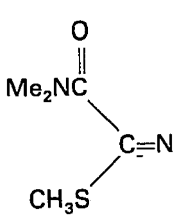 | t-Bu | H | 0 | |

| R | $R_1$ | $R_2$ | n | physical properties |
|---|---|---|---|---|
| 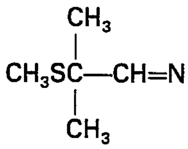 | $CH_3$ | $CH_3$ | 0 | |
| 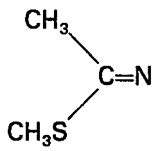 | $—CH_2CH_2CH_2CH_2—$ | | 0 | mp 170—173°C (dec) |
| 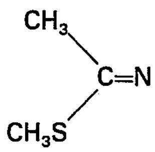 | $—CH_2CH_2CH_2—$ | | 0 | |
| 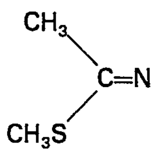 | 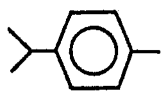 | 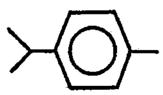 | 0 | |
| 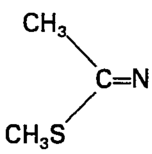 | 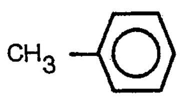 | 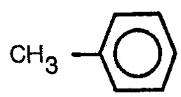 | 0 | |
| 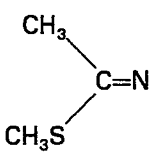 | 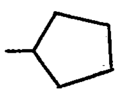 | 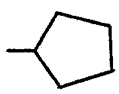 | 0 | |
| 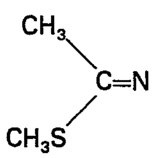 | $CH_3CH_2$ | $CH_3CH_2$ | 0 | |
| 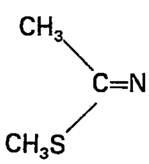 | $CH_3CH_2CH_2$ | $CH_3CH_2CH_2$ | 0 | |
| 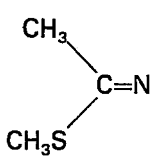 | $(CH_3)_2CH—$ | $(CH_3)_2CH—$ | 0 | |
| 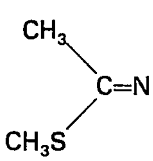 | $CH_3CH_2SCH_2$ | $CH_3$ | 0 | |

(TABLE 1, continued)

| R | $R_1$ | $R_2$ | n | physical properties |
|---|---|---|---|---|
| 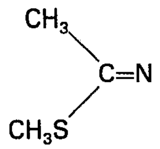 | $CH_3CH_2S$ | $CH_3CH_2S$ | 0 | |
| 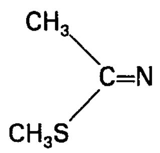 | $C_6H_5$ | $CH_3$ | 0 | |
| 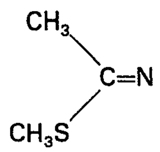 | $CH_3$ | $CH_3S$ | 0 | |
| 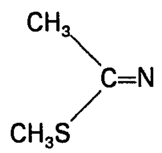 | $—SCH_2CH_2S—$ | | 0 | mp 204—207°C (dec) |
| 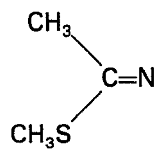 | $CH_3$ | $CH_3CH_2$ | 0 | mp 193—195.5°C (dec) |
| 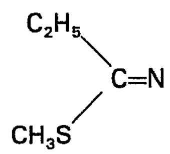 | $CH_3$ | $CH_3$ | 0 | |
| 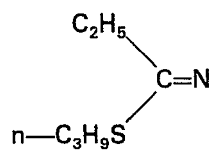 | $CH_3$ | $CH_3$ | 0 | |
| 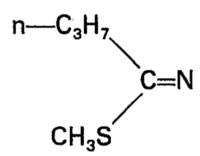 | $CH_3$ | $CH_3$ | 0 | |
| 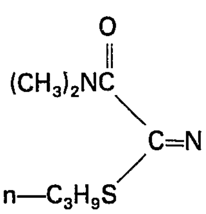 | $CH_3$ | $CH_3$ | 0 | |
| 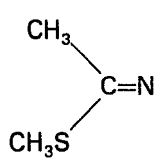 | $CH_3$ | $CH_3(CH_2)_3$ | 0 | mp 99—104°C |

Formulation

Useful formulations of the compounds of Formula I can be prepared in conventional ways. They include dusts, granules, pellets, solutions, wettable powders, and the like. Many of these may be applied directly. Sprayable formulations can be extended in suitable media and used at spray volumes of from a few pints to several hundred gallons per acre. High strength compositions are primarily used as intermediates for further formulations. The formulations, broadly, contain about 1% to 99% by weight of active ingredient(s) and at least one of a) about 0.1% to 20% surfactant(s) and b) about 1% to 99% solid or liquid diluent(s). More specifically, they will contain these ingredients in the following approximate proportions:

TABLE 2

| | Active ingredient | Diluent(s) | Surfactant(s) |
|---|---|---|---|
| Wettable powders | 20—90 | 0—74 | 1—10 |
| Oil suspensions, solutions | 5—50 | 40—95 | 0—15 |
| Aqueous suspensions | 10—50 | 40—84 | 1—20 |
| Dusts | 1—25 | 70—99 | 0—5 |
| Granules and pellets | 1—95 | 5—99 | 0—15 |
| High strength compositions | 90—99 | 0—10 | 0—2 |

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Typical solid diluents are described in Watkins, et al., "Handbook of Insecticide Dust Diluents and Carriers", 2nd. Edn., Dorland Books, Caldwell, N. J. The more absorptive diluents are preferred for wettable powders and the denser ones for dusts. Typical liquid diluents and solvents are described in Marsden, "Solvents Guide", 2nd. Edn., Interscience, New York, 1950. Solubility under 0.1% is preferred for suspension concentrates; solution concentrates are preferably stable against phase separation at 0°C. McCutcheon's "Detergents and Emulsifiers Annual", MC Publishing Co., Ridgewood, New Jersey, as well as Sisely and Wood, "Encyclopedia of Surface Active Agents", Chemical Publ. Co., Inc., New York, 1964, list surfactants and recommended uses. All formulations can contain minor amounts of additives to reduce foam, caking, corrosion, microbiological growth, etc. Preferably, ingredients should be approved by the U.S. Environmental Protection Agency for the use intended.

The method of making such compositions are well known. Solutions are prepared by simply mixing the ingredients. Fine solid compositions are made by blending and, usually, grinding as in a hammer or fluid energy mill. Suspensions are prepared by wet milling (see, for example, Littler, U.S. Patent 3,060,084). Granules and pellets may be made by spraying the active material upon preformed granule carriers or by agglomeration techniques. See J. E. Browning, "Agglomeration", *Chemical Engineering*, Dec. 4, 1967, pp. 147 ff. and "Perry's Chemical Engineer's Handbook", 4th Edn., McGraw-Hill, N. Y., 1963, pp. 8—59ff.

For further information regarding the art of formulation see for example:

J. B. Buchanan, U.S. Patent 3,576,834, April 27, 1971, Col. 5, lines 36 through Col. 7, Line 70 and Ex. 1—4, 17, 106, 123—140;

R. R. Shaffer, U.S. Patent 3,560,616, Feb. 2, 1971, Col. 3, Line 48 through Col. 7, line 26 and Ex. 3—9, 11—18;

E. Somers, "Formulation", Chapter 6 in Torgeson, "Fungicides", Vol. I, Academic Press, New York, 1967.

In the following Examples, percentage compositions are calculated on a weight basis.

Example 5

Wettable powder

| | |
|---|---|
| Dimethyl N,N'[2,3-butanediylidenebis-[nitrilooxycarbonyl(N-methylimino)-thio(N-methyliminocarbonyloxy]]bis-[ethanimidothioate] | 30% |
| Dioctyl sodium sulfosuccinate | 1.5% |
| Sodium ligninsulfonate | 3% |
| Low viscosity methyl cellulose | 1.5% |
| Attapulgite | 64% |

The ingredients are thoroughly blendeded, passed through an air mill to produce an average particle size under 15 microns, reblended, and sifted through a U.S.S. No. 50 sieve (0.3 mm opening) before packaging.

All compounds of the invention may be formulated in the same manner.

Example 6
Wettable powder

| | |
|---|---|
| Dimethyl N,N'-[1,2-propanediylidenbis-[nitrilooxycarbonyl(N-methylimino)-thio(N-methylimino)carbonyloxy]]bis-[ethanimidothioate] | 50% |
| Sodium alkylnaphthalenesulfonate | 2% |
| Low viscosity methyl cellulose | 2% |
| Diatomaceous earth | 46% |

The ingredients are blended, coarsely hammer-milled and then air milled to produce particles of active essentially all below 10 microns in diameter. The product is reblended before packaging.

Example 7
Dust

| | |
|---|---|
| Wettable powder of Example 6 | 10% |
| Pyrophyllite (powder) | 90% |

The wettable powder and the pyrophyllite diluent are thoroughly blended and then packaged. The product is suitable for use as a dust.

Example 8
Solution

| | |
|---|---|
| Dimethyl N,N'-[2,4-pentanediylidenbis-[nitrilooxycarbonyl(N-methylimino)-thio(N-methylimino)carbonyloxy]]bis-[ethanimidothioate] | 30% |
| Dimethylformamide | 70% |

The ingredients are combined and stirred to produce a solution, which can be used for low volume applications.

Example 9
Granule

| | |
|---|---|
| Wettable powder of Example 5 | 15% |
| Gypsum | 69% |
| Potassium sulfate | 16% |

The ingredients are blended in a rotating mixer and water sprayed on to accomplish granulation. When most of the material has reached the desired range of 1.0 to 0.42 mm. (U.S.S. No. 18 to 40 sieves), the granules are removed, dried, and screened. Oversize material is crushed to produce additional material in the desired range. These granules contain 4.5% active ingredient.

Example 10
Extruded pellet

| | |
|---|---|
| Dimethyl N,N'-[2,5-hexanediylidenebis-[nitrilooxycarbonyl(N-methylimino)-thio(N-methylimino)carbonyloxy]]bis-[ethanimidothioate] | 25% |
| Anhydrous sodium sulfate | 10% |
| Crude calcium ligninsulfonate | 5% |
| Sodium alkylnaphthalenesulfonate | 1% |
| Calcium/magnesium bentonite | 59% |

The ingredients are blended, hammer milled and then moistened with about 12% water. The mixture is extruded as cylinders about 3 mm diameter which are cut to produce pellets about 3 mm long. These may be used directly after drying, or the dried pellets may be crushed to pass a U.S.S. No. 20 sieve (0.84 mm opening). The granules held on a U.S.S. No. 40 Sieve (0.42 mm opening) may be packaged for use and the fines recycled.

Example 11
Aqueous suspension

| | |
|---|---|
| Dimethyl N,N'-[2,3-butanediylidenebis-[nitrilooxycarbonyl(N-methylimino)-thio(N-methylimino)carbonyloxy]]bis-[ethanimidothioate] | 25% |

| | |
|---|---|
| Hydrated attapulgite | 3% |
| Crude calcium ligninsulfonate | 10% |
| Sodium dihydrogen phosphate | 0.5% |
| Water | 61.5% |

The ingredients are ground together in a ball or roller mill until the solid particles have been reduced to diameters under 10 microns.

Use

The compounds of this invention are useful for control of arthropods and nematodes which are detrimental to agriculture, animals important to man, forestry, horticulture, the household, man-made structures, public health and stored products.

As demonstrated in the following examples, the compounds have provided a high degree of control of important pests with reduction of side effects known in some prior art compounds such as phytotoxicity.

The compounds readily control pestiferous arthropods belonging to such orders as Lepidoptera, Coleoptera, Diptera, Acari, Hymenoptera and Isoptera. More specifically, arthropods controlled by the compounds of this invention include but are not limited to: southern armyworm (*Spodoptera eridanis*), fall armyworm (*Spodoptera frugiperda*), soybean looper (*Pseudoplusia includens*), the house fly (*Musca domestica*), tobacco budworm (*Heliothis virescens*), bollworm (*Heliothis zea*) eastern tent caterpiller (*Malacusoma americanum*), brown dog tick (*Phipicephalus sanguineus*), and black carpenter ant (*Camponotus pennsylvanicus*).

These compounds readily control pestiferous nematodes. More specifically, nematodes controlled by compounds of this invention include, but are not limited to, the root-knot nematode, *Meloidogyne incognita*; lesion nematode, *Pratylenchus* spp. and dagger nematode, *Xiphinima*.

The arthropods are controlled by applying one or more of the compounds to the locus of infestation, to the area to be protected, or to the pests themselves. For the control of pestiferous arthropods on agricultural, horticultural and forest crops, compounds of this invention are generally applied to the foliage or other plant parts which are infested or which are to be protected. Effective amounts to be applied depend upon the specific compound used, the species to be controlled, its life stage, its size and location, the amount of rainfall, the time of year, moisture, temperature, type of application plant spacing, and other variables. In general, 0.05 to 10.0 kg/ha may be required for insect control in agriculture with rates of 0.15 to 5.0 kg/ha usually being sufficient in many situations. In large scale field operations, rates in the range of 0.25 to 3.0 kg/ha are generally used.

Nematodes are controlled by applying the compounds to the locus of infestation, to the area to be protected or to the pest themselves. For the control of nematodes in agricultural crops, a compound of this invention is generally applied to a portion of the plant or surrounding soil which is infested or which is to be protected. Effective amounts to be applied depend upon the species to be controlled, its life stage, its size and location, the amount of rainfall, the time of year, moisture, temperature, soil type, percentage of area treated, type of application, and other variables. In general, 3 to 30 kg/ha may be required for nematode control in agriculture with rates of 5 to 10 kg/ha usually being sufficient in many situations.

For the control of pestiferous arthropods of animals important to man, the household, man-made structures and stored products, generally a formulation in the form of a solution, dispersion or dust containing 0.001 to 10% by weight, preferably 0.05 to 5% and more preferably 0.1 to 2.5% of the compound is applied in an effective amount to the area to be protected, due note being taken of variables such as those mentioned above.

The compounds of this invention possess significant advantages over some prior art compounds such as methomyl. For example, their improved residual insecticidal activity can reduce the need for closely spaced multiple sprays resulting in greater economy to the grower and dissemination of less insecticide in the environment. As additional advantage is the reduced side-effects on cotton. Treated leaves remain green and free of the reddening typically seen after treatment with methomyl.

The compounds of this invention can be mixed with fungicides, bactericides, acaricides, nematicides, insecticides, or other biologically active compounds in order to achieve desired results with a minimum expenditure of time, effort and material. Amounts of these biologically active materials added for each part by weight of the composition of this invention may vary from 0.05 to 25 parts by weight. Suitable agents of this type are well-known to those skilled in the art. Some are listed below:

Fungicides

methyl 2-benzimidazolecarbamate (carbendazim),
tetramethyl thiuram disulfide (thiuram),
*n*-dodecylguanidine acetate (dodine),
manganese ethylenebisdithiocarbamate (maneb),
1,4-dichloro-2,5-dimethoxybenzene (chloroneb),
methyl 1-(butylcarbamoyl)-2-benzimidazolecarbamate (benomyl),

2-cyano-N-ethylcarbamoyl-2-methoxyimino acetamide Curzate®,
N-trichloromethylthiotetrahydrophthalimide (captan),
N-trichloromethylthiophthalimide (folpet);

Bactericides
tribasic copper sulfate,
streptomycin sulfate;

Acaricides
senecioic acid, ester with 2-*sec*-butyl-4,6-dinitrophenyl (Morocide®),
6-methyl-1,3-dithiolo[2,3-B]quinonolin-2-one (Morestan®),
ethyl 4,4'(*p*-chlorophenyl)-2,2,2-trichloroethanol (Kelthane®),
bis(pentochloro-2,4-cyclopentadien-lyl) (Pentac®),
trichlohexyltin hydroxide (Plictran®);

Nematicides
2-[diethoxyphosphinylimino]-1,3-dithietane (Nematak®),
S-methyl 1-(dimethylcarbamoyl)-N-(methylcarbamoyloxy)thioformimidate (Vydate®),
S-methyl 1-carbamoyl-N-(methylcarbamoyloxy)thioformidate,
N-isopropylphosphoramidic acid, O-ethyl-O'[4-(methylthio)-*m*-tolyl]diester (Nemacur®),

Insecticides
3-hydroxy-N-methylcrotonamide)dimethylphosphate)ester (Azodrin®),
methylcarbamic acid, ester with 2,3-dihydro-2,2-dimethyl-7-benzofuranol (Furadan®),
O-[2,4,5-trichloro-$\alpha$-(chloromethyl)benzyl]phosphoric acid, O',O'-dimethyl ester (Gardona®),
2-mercaptosuccinic acid, diethyl ester, S-ester with thionophosphoric acid, dimethyl ester (Malathion®),
phosphorothioic acid, O,O-dimethyl, O-*p*-nitrophenyl ester (methyl parathion)
methylcarbamic acid, ester with $\alpha$-naphthol (Sevin®),
methyl O-(methylcarbamoyl)thiolacetohydroxamate (methomyl)
N'-(4-chloro-*o*-tolyl)-N,N-dimethylformamidine (Galecron®),
O,O-diethyl-O-(2-isopropyl-4-methyl-6-pyrimidylphosphorothioate (Diazinon®),
octachlorocamphene (toxaphene)
O-ethyl O-*p*-nitrophenyl phenylphosphonothioate (EPN) cyano(3-phenoxyphenyl)-methyl-4-chloro-$\alpha$-(1-methylethyl)benzeneacetate (Pydrin®),
(3-phenoxyphenyl)methyl(±)-*cis*, *trans*-3-(2,2-dichloroethenyl)-2,2-dimethylcyclopropanecarboxylate, (Ambush®),
dimethyl N,N'-[thiobis[(n-methylimino)carbonyloxy]]bis[ethanimidothioate] (Larvin®),
O-ethyl-S-(*p*-chlorophenyl)ethylphosphonodithioate (Curacron®),
phosphorothiolothionic acid, O-ethyl-O-[4-(methylthio)phenyl]-S-*n*-propyl ester (Bolstar®).

Example 12

The foliage only of red kidney bean plants in the two-leaf stage is sprayed to run-off with dispersions of compounds of this invention at various concentrations. Dispersions are prepared by dissolving appropriately weighed quantities of the active ingredient in 10 ml of acetone and diluting to 100 ml of water containing surface active agent (Duponol® L—144 WDG) at 1:3000. After drying, leaves are excised and placed in covered 10 cm petri dishes along with moist filter paper to keep them fresh. Ten southern armyworm larvae are placed in each dish. The units are kept in a room maintained at 25±2°C. 53±5% RH. Results are recorded at the end of two days.

| Compound | Concentration % | Mortality % |
|---|---|---|
| dimethyl N,N'-[2,3-butanediylidenebis[nitrilooxy-carbonyl(N-methylimino)thio(N-methylimino)carbonyl-oxy]]bis[ethanimidothioate] | .004<br>.002 | 95<br>90 |
| dimethyl N,N'-[1,2-propanediylidenebis[nitrilooxy-carbonyl(N-methylimino)thio(N-methylimino)carbonyl-oxy]]bis[ethanimidothioate] | .01<br>.005<br>.0025 | 100<br>100<br>95 |
| dimethyl N,N'-[2,4-pentanediylidenebis[nitrilooxy-carbonyl(N-methylimino)thio(N-methylimino)carbonyl-oxy]]bis[ethanimidothioate] | .01<br>.005 | 100<br>80 |
| dimethyl N,N'-[2,5-hexanediylidenebis[nitrilooxy-carbonyl(N-methylimino)thio(n-methylimino)carbonyl-oxy]]bis[ethanimidothioate] | .01<br>.005 | 100<br>90 |
| Untreated | — | 0 |

Example 13

The foliage of red kidney bean plants in the two-leaf stage is sprayed to run-off with dispersions of compounds of this invention at various concentrations. Dispersions are prepared by dissolving appropriately weighed quantities of the active ingredient in 10 ml of acetone and diluting to 100 ml with water containing surface active (Duponol® L—144 WDG) at 1:3000. After drying, plants are placed under artificial light in a room maintained at 25±2°C, 54±5% RH. After the designated period, leaves are excised and placed in covered 10 cm petri dishes along with moist filter paper to keep them fresh. Ten southern armyworm larvae are placed in each dish. The units are kept in a room maintained at 25±2°C, 54% RH. Results are recorded at the end of two days.

| Compound | Concentration % | Days 2 | (%Dead) 7 |
|---|---|---|---|
| dimethyl N,N'-[2,3-butanediylidenebis[nitrilooxy-carbonyl(N-methylimino)thio(N-methylimino)carbonyl-oxy]]bis[ethanimidothioate] | .01 | 90 | 100 |
| | .005 | 100 | 95 |
| Untreated check | | 0 | 0 |

Example 14

Potted cotton plants approximately 25 cm high having 3—4 true leaves are sprayed to run-off with aqueous dispersions of compounds of this invention at 500 ppm. The sprays contain surface active agent (Duponol® L—144 WDG) at a concentration of 1:3000. Another set of plants is similarly treated with methomyl. After drying, plants are set out in the greenhouse and held for observations.

| Compound (500 ppm AI[1]) | Rating[2] (5 Days) |
|---|---|
| dimethyl N,N'-[2,3-butanediylidenebis[nitrilooxy-carbonyl(N-methylimino)thio(N-methylimino)carbonyl oxy]]bis[ethanimidothioate] | 0 |
| Methomyl | 4R |
| Untreated control | 0 |

[1]AI=active ingredient

[2]"R"denotes typical methomyl effect, i.e., reddening of older leaves, slight puckering and black stippling of younger leaves. Rating is on the basis of 0 to 10, with 10 indicating total leaf area involvement.

Example 15

Tobacco budworm (*Heliothis virescens*) larvae are treated topically with compounds of the invention. One microliter of each concentration used is applied to the dorso-thoracic area of each larva tested. The stock solutions are prepared by dissolving appropriately weighed quantities of active ingredient in predetermined quantities of acetone. Further dituting with acetone yields the desired concentrations. Larvae were treated in individual 1-oz. cups in which were reared on artificial diet. Fifteen or twenty larvae were treated with each desired concentration and kept in a room at 25±2°C. Results were recorded 2 days after treatment.

| Compound | Concentration ($\mu$g/larva) | % Mortality (48 hrs) |
|---|---|---|
| dimethyl N,N'-[2,3-butanediylidenebis[nitrilooxy-carbonyl(N-methylimino)thio(N-methylimino)carbonyl-oxy]]bis[ethanimidothioate] | 0.25 | 93 |
| | 0.125 | 85 |
| dimethyl N,N'-[2,4-pentanediylidenebis[nitrilooxy-carbonyl(N-methylimino)thio(N-methylimino)carbonyl-oxy]]bis[ethanimidothioate] | 0.5 | 87 |
| | 0.25 | 73 |
| Untreated | — | 0 |

Example 16

Dimethyl N,N'-[[2,3-butanediylidenebis[nitrilooxycarbonyl(N-methylimino)thio(N-methylimino)carbonyloxy]]]-bis-[ethanimidothioate], was dissolved in acetone and mixed into soil containing the root-knot nematode, *Meloidogyne incognita*, was similarly dissolved in acetone and mixed into soil containing the root-knot nematode, *Meloidogyne incognita*. The treated soil samples were planted with cucumber seeds. After two weeks, the roots were examined for nematode injury and the results are summarized below.

| Compound | kg/ha | % Nematode control |
|---|---|---|
| dimethyl N,N′-[2,3-butanediylidenebis[nitrilooxy-carbonyl(N-methylimino)thio(N-methylimino)carbonyloxy]]bis[ethanimidothioate] | 15 | 100 |
| Untreated control | — | 0 |

Example 17

Dimethyl N,N′-[2,3-butanediylidenebis[nitrilooxycarbonyl(N-methylimino)thio(N-methylimino)carbonyloxy]]bis[ethanimidothioate] is dissolved in acetone and sprayed at either 100 ppm or 10 ppm concentration into jars containing ten black carpenter ants (*Camponotus pennsylvanicus*). The jars are kept in a room of 25±2°C. Results are recorded two days after treatment.

| Concentration (ppm) | % Mortality (48 hrs) |
|---|---|
| 100 | 100 |
| 10 | 100 |
| 0 (control) | 0 |

Example 18

Dimethyl N,N′-[2,3-butanediylidenebis[nitrilooxycarbonyl(N-methylimino)thio(N-methylimino)carbonyloxy]]bis[ethanimidothioate] is dissolved in acetone and sprayed at either 10 ppm or 5 ppm concentration into jars containing ten brown dog ticks (*Phipicephalus sanguineus*). The jars are kept in a room at 25±2°C. The following results are accessed after two days.

| Concentration (ppm) | % Mortality (48 hrs) |
|---|---|
| 10 | 100 |
| 5 | 100 |
| 0 (control) | 0 |

Example 19

An aqueous dispersion of dimethyl N,N′-[2,3-butanediylidenebis[nitrilooxycarbonyl(N-methylimino)thio(N-methylimino)carbonyloxy]]bis[ethanimidothioate] at either 75 ppm or 18.75 ppm (1 or 0.25 oz per 100 US gallons) is sprayed to run-off onto four eastern tent caterpillar nests (*Malacosoma americanum*) on cut branches of wild cherry trees. The sprays contain surface active agent (Duponol L—144 WDG) at 1:3000. The branches are kept in a room maintained at 25±2°C. After five days, both concentrations give 99% kill relative to an untreated control.

**Claims for the contracting states: BF, CH, DE, FR, GB, IT, LU, NL, SE.**

1. A compound of the formula

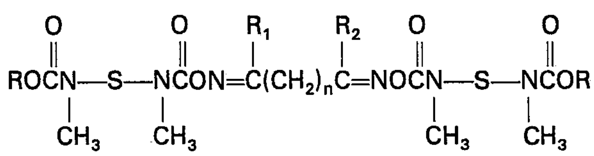

wherein

R is

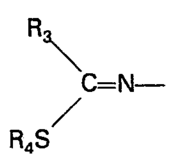

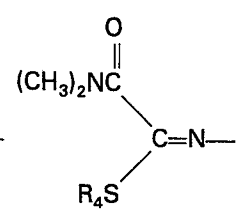

or

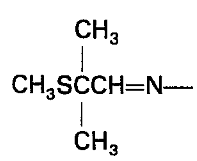

$R_1$ is hydrogen, $C_1$—$C_4$ alkyl, $C_5$—$C_6$ cycloalkyl, $C_1$—$C_3$ alkylthio, chlorine, chloromethyl,

$-\overset{O}{\overset{\|}{C}}N(CH_3)_2$, $R_5SCH_2-$, $-\overset{O}{\overset{\|}{C}}OR_6$,

phenyl or phenyl substituted with $C_1$—$C_4$ alkyl; $R_2$ is hydrogen, $C_1$—$C_4$ alkyl, $C_5$—$C_6$ cycloalkyl, chlorine, $C_1$—$C_3$ alkylthio, phenyl or phenyl substituted with $C_1$—$C_4$ alkyl;

$R_1$, $R_2$ can be taken together to form a carbocyclic bridge of three to five carbon atoms or a bridge of the formula $-SCH_2CH_2S-$;

$R_3$ is $C_1$—$C_3$ alkyl;

$R_4$ is $C_1$—$C_3$ alkyl;

$R_5$ is $C_1$—$C_3$ alkyl;

$R_6$ is $C_1$—$C_6$ alkyl; and

n is 0, 1 or 2;

1) provided that n is 0 when $R_1$ is chloromethyl or $R_5SCH_2$, or

2) provided that n is 0 when $R_1R_2$ is taken together to form a carbocyclic bridge or a bridge of the formula $-SCH_2CH_2S-$, or

3) provided that n is 0 when at least one of $R_1$ and $R_2$ is alkylthio;

and provided that when n is 0, one of $R_1$ and $R_2$ cannot be H when the other is phenyl or phenyl substituted with $C_1$—$C_4$ alkyl;

and further provided that when n is 1,

$R_1$ and $R_2$ cannot both be t-butyl, phenyl, phenyl substituted with $C_1$—$C_4$ alkyl or any combination thereof.

2. A compound of claim 1 where $R_3$ is $CH_3$.

3. A compound of claim 1 or 2 where $R_1$ and $R_2$ are independently hydrogen, $C_1$—$C_4$ alkyl,

$\overset{O}{\overset{\|}{C}}N(CH_3)_2$,

phenyl or phenyl substituted with $C_1$—$C_4$ alkyl or where $R_1$ and $R_2$ are taken together to form a carbocyclic bridge of three to five carbon atoms.

4. A compound of claim 1, 2 or 3 where n is 0.

5. A compound of any of claims 1 to 4 where

R is

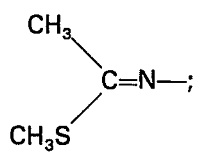

$R_1$ and $R_2$ are independently hydrogen or $C_1$—$C_4$ alkyl; and n is 0; provided at least one of $R_1$ and $R_2$ is other than hydrogen.

6. Dimethyl N,N'-[2,3-butanediylidenebis[nitrilooxycarbonyl(N-methylimino)thio(N-methylimino)carbonyloxy]]bis[ethanimidothioate].

7. Dimethyl N,N'-[1,2-propanediylidenebis[nitrilooxycarbonyl(N-methylimino)thio(N-methylimino)carbonyloxy]]bis[ethanimidothioate].

8. Dimethyl N,N'-[2,4-pentanediylidenebis[nitrilooxycarbonyl(N-methylimino)thio(N-methylimino)carbonyloxy]]bis[ethanimidothioate].

9. Dimethyl N,N'-[2,5-hexanediylidenebis[nitrilooxycarbonyl(N-methylimino)thio(N-methylimino)carbonyloxy]]bis[ethanimidothioate].

10. N-Methyl-N-[N-methyl-N-(2-methyl-2-methylthiopropylideneaminooxycarbonyl)aminothio]-carbamic acid, diester with 2,3-butanedione, dioxime.

11. N,N'-[2,3-Butanediylidenebis[nitrilooxycarbonyl(N-methylaminothio-(N-methylimino)carbonyloxy]bis]-2-(dimethylamino)-2-oxoethanimidothioic acid, dimethyl ester.

12. An agricultural composition comprising a diluent, surfactant or mixture thereof and an effective amount of a pesticide, characterised in that said pesticide comprises a compound of any of claims 1 to 11.

13. A method for control of pestiferous arthropods by applying to a locus to be protected an effective amount of a pesticidal compound characterised in that said pesticidal compound comprises a compound of any of claims 1 to 11.

14. The method of claim 13 wherein an insect pest is controlled in an agricultural, horticultural or forest locus.

15. The method of claim 13 wherein an arthropod pest is controlled in an animal locus.

16. A method for control of nematodes by applying to a locus to be protected an effective amount

of a nematicidal compound characterised in that said nematicidal compound comprises a compound of any of claims 1 to 11.

17. A process for preparing a compound of claim 1 which comprises

(a) contacting in the presence of an acid acceptor

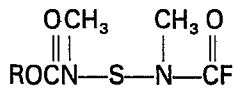

and

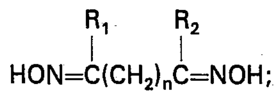

or

(b) contacting in an aprotic solvent; or in a water/immiscible organic solvent mixture, in the presence of a phase transfer catalyst:

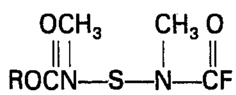

and

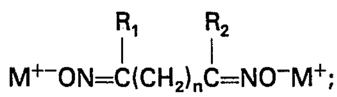

or

(c) contacting in the presence of an acid acceptor:

ROH

and

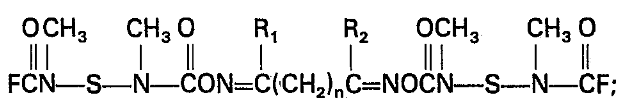

or

(d) contacting

$RO^-M^+$

and

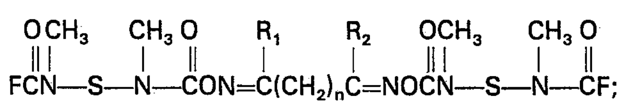

wherein in each of the above processes R, $R_1$ and $R_2$ are as defined in claim 1 and M is alkali metal.

**Claims for the contracting state: AT**

1. A process for making a compound of the formula

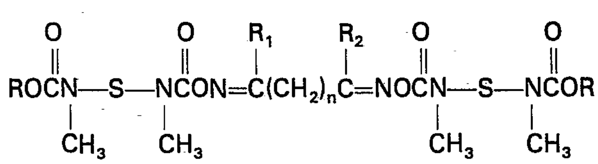

wherein

R is

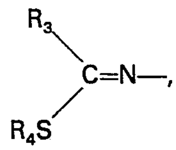

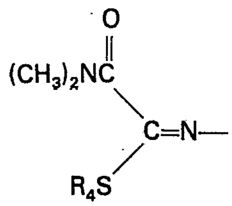

or

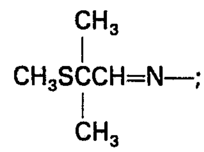

$R_1$ is hydrogen, $C_1$—$C_4$ alkyl, $C_5$—$C_6$ cycloalkyl, $C_1$—$C_3$ alkylthio, chlorine, chloromethyl,

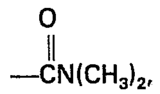

$R_5SCH_2$—,

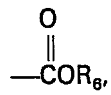

phenyl or phenyl substituted with $C_1$—$C_4$ alkyl;

$R_2$ is hydrogen, $C_1$—$C_4$ alkyl, $C_5$—$C_6$ cycloalkyl, chlorine, $C_1$—$C_3$ alkylthio, phenyl or phenyl substituted with $C_1$—$C_4$ alkyl;

$R_1$, $R_2$ can be taken together to form a carbocyclic bridge of three to five carbon atoms or a bridge of the formula —$SCH_2CH_2S$—;

$R_3$ is $C_1$—$C_3$ alkyl;

$R_4$ is $C_1$—$C_3$ alkyl;

$R_5$ is $C_1$—$C_3$ alkyl;

$R_6$ is $C_1$—$C_6$ alkyl; and

n is 0, 1 or 2;

1) provided that n is 0 when $R_1$ is chloromethyl or $R_5SCH_2$, or

2) provided that n is 0 when $R_1R_2$ is taken together to form a carbocyclic bridge or a bridge of the formula —$SCH_2CH_2S$—, or

3) provided that n is 0 when at least one of $R_1$ and $R_2$ is alkylthio;

and provided that when n is 0, one of $R_1$ and $R_2$ cannot be H when the other is phenyl or phenyl substituted with $C_1$—$C_4$ alkyl;

and further provided that when n is 1,

$R_1$ and $R_2$ cannot both be t-butyl, phenyl, phenyl substituted with $C_1$—$C_4$ alkyl or any combination thereof;

which comprises

(a) contacting in the presence of an acid acceptor

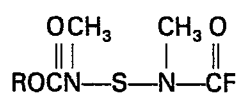

and

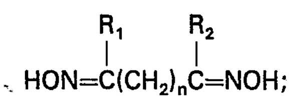

or

(b) contacting in an aprotic solvent; or in a water/immiscible organic solvent mixture, in the presence of a phase transfer catalyst:

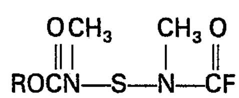

and

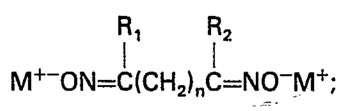

or

(c) contacting in the presence of an acid acceptor:

ROH

and

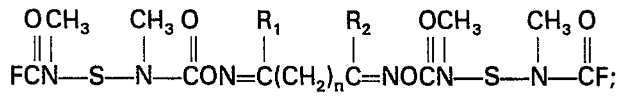

or

(d) contacting

$RO^{-}M^{+}$

and

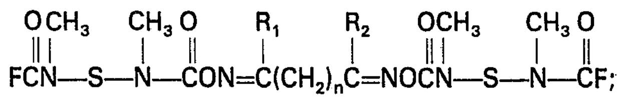

wherein in each of the above processes R, $R_1$ and $R_2$ are as defined above and M is alkali metal.

2. A process of claim 1 where $R_3$ is $CH_3$.

3. A process of claim 1 or 2 where $R_1$ and $R_2$ are independently hydrogen, $C_1$—$C_4$ alkyl,

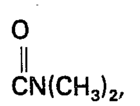

phenyl or phenyl substituted with $C_1$—$C_4$ alkyl or where $R_1$ and $R_2$ are taken together to form a carbocyclic bridge of three to five carbon atoms.

4. A process of claim 1, 2 or 3 where n is 0.

5. A process of any of claims 1 to 4 where R is

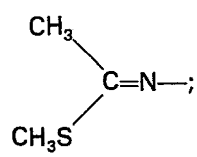

$R_1$ and $R_2$ are independently hydrogen or $C_1$—$C_4$ alkyl; and n is 0;
provided at least one of $R_1$ and $R_2$ is other than hydrogen.

6. A process of claim 1 wherein the product is selected from

dimethyl N,N′-[2,3-butanediylidenebis[nitrilooxycarbonyl(N-methylimino)thio(N-methylimino)carbonyloxy]]bis[ethanimidothioate];

dimethyl N,N′-[1,2-propanediylidenebis[nitrilooxycarbonyl(N-methylimino)thio(N-methylimino)-carbonyloxy]]bis[ethanimidothioate];

dimethyl N,N′-[2,4-pentanediylidenebis[nitrilooxycarbonyl(N-methylimino)thio(N-methylimino)-carbonyloxy]]bis[ethanimidothioate];

dimethyl N,N′-[2,5-hexanediylidenebis[nitrilooxycarbonyl(N-methylimino)thio(N-methylimino)-carbonyloxy]]bis[ethanimidothioate];

N-methyl-N-[N-methyl-N-(2-methyl-2-methylthiopropylideneaminooxycarbonyl)amino-thio]carbamic acid, diester with 2,3-butanedione, dioxime; and

N,N′ - [2,3-butanediylidenebis[nitrilooxycarbonyl(N-methylaminothio-(N-methylimino)carbonyloxy]-bis]-2-(dimethylamino)-2-oxoethanimidothioic acid, dimethyl ester.

7. A method for control of pestiferous arthropods by applying to a locus to be protected an effective amount of a pesticidal compound characterised in that said pesticidal compound comprises a compound of formula (I) as defined in any of claims 1 to 6.

8. The method of claim 7, wherein an insect pest is controlled in an agricultural, horticultural or forest locus.

9. The method of claim 7 wherein an arthropod pest is controlled in an animal locus.

10. A method for control of nematodes by applying to a locus to be protected an effective amount of a nematicidal compound characterised in that said nematicidal compound comprises a compound of formula (I) as defined in any of claims 1 to 6.

**Revendications pour les Etats Contractants: BE, CH, DE, FR, GB, IT, LU, NL, SE.**

1. Un composé de la formule:

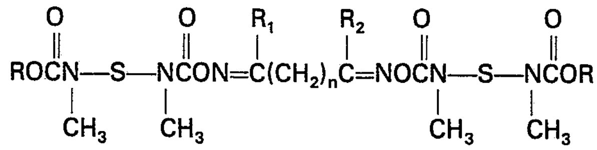

dans laquelle:

R est

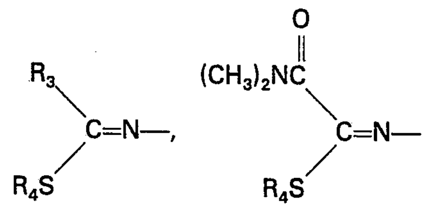

ou

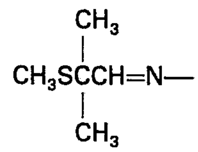

$R_1$ est l'hydrogène, un groupe alkyle en $C_1$ à $C_4$, cycloalkyle en $C_5$ à $C_6$, alkylthio en $C_1$ à $C_3$, le chlore, un groupe chlorométhyle,

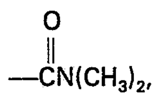 $R_5SCH_2$—, 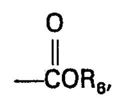

phényle, ou phényle substitué par un groupe alkyle en $C_1$ à $C_4$;

$R_2$ est l'hydrogène, un groupe alkyle en $C_1$ à $C_4$, cycloalkyle, le chlore, un groupe alkylthio en $C_1$ à $C_3$, phényle ou phényle substitué par un groupe alkyle en $C_1$ à $C_4$;

$R_1$ et $R_2$ peuvent être réunis pour former un pont carbocyclique de 3 à 5 atomes de carbone ou un pont de la formule —$SCH_2CH_2S$—;

$R_3$ est un groupe alkyle en $C_1$ à $C_3$;

$R_4$ est un groupe alkyle en $C_1$ à $C_3$;

$R_5$ est un groupe alkyle en $C_1$ à $C_3$;

$R_6$ est un groupe alkyle en $C_1$ à $C_8$, et

*n* vaut 0, 1 ou 2;

avec la condition que n=0 lorsque:

1) $R_1$ est un groupe chlorométhyle ou $R_5SCH_2$, ou

2) lorsque $R_1R_2$ sont réunis pour former un pont carbocyclique ou un pont de formule —$SCH_2CH_2S$—, ou

3) lorsque au moins un de $R_1$ et $R_2$ est un groupe alkylthio;

et avec la condition que, lorsque n=0, l'un de $R_1$ et $R_2$ ne peut pas être H quand l'autre est un groupe phényle ou phényle substitué par un groupe alkyle en $C_1$ à $C_4$;

et avec la condition aussi que, lorsque n=1, $R_1$ et $R_2$ ne peuvent pas être tous deux des groupes t-butyle, phényle, phényle substitués par un groupe alkyle en $C_1$ à $C_4$ ni des combinaisons quelconques de ceux-ci.

2. Composé selon la revendication 1, dans lequel $R_3$ est $CH_3$.

3. Composé selon la revendication 1 ou 2, dans lequel $R_1$ et $R_2$ sont indépendamment l'hydrogène, un groupe alkyle en $C_1$ à $C_4$,

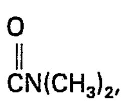

phényle ou phényle substitué par un groupe alkyle en $C_1$ à $C_4$, ou dans lequel $R_1$ et $R_2$ sont réunis pour former un pont carbocyclique de 3 à 5 atomes de carbone.

4. Composé selon la revendication 1, 2 ou 3, dans lequel n=0.

5. Composé selon l'une quelconque des revendications 1 à 4, dans lequel

R est

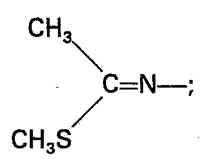

$R_1$ et $R_2$ sont indépendamment l'hydrogène ou un groupe alkyle en $C_1$ à $C_4$, et n=0, avec la condition qu'au moins un de $R_1$ et $R_2$ est autre que l'hydrogène.

6. N,N'-[2,3-butanediylidènebis[nitrilooxycarbonyl(N-méthylimino)thio(N-méthylimino)carbonyloxy]]bis[éthanimidothioate] de diméthyle.

7. N,N'-[1,2-propanediylidènebis[nitrilooxycarbonyl(N-méthylimino)thio(N-méthylimino)carbonyloxy]]bis[éthanimidothioate] de diméthyle.

8. N,N'-[2,4-pentanediylidènebis[nitrilooxycarbonyl(N-méthylimino)thio(N-méthylimino)carbonyloxy]]bis[éthanimidothioate] de diméthyle.

9. N,N'-[2,5-hexanediylidènebis[nitrilooxycarbonyl(N-méthylimino)thio(N-méthylimino)carbonyloxy]]bis[éthanimidothioate] de diméthyle.

10. Diester de l'acide N-Méthyl-N-[N-méthyl-N-(2-méthyl-2-méthylthio-propylidèneaminooxycarbonyl)aminothio]carbamique avec la 2,3-butanedione-dioxime.

11. Ester diméthylique de l'acide N,N'[2,3-butanediylidènebis(nitrilooxycarbonyl(N-méthylaminothio-(N-méthylimino)carbonyloxy)bis]-2-(diméthylamino)-2-oxoéthanimidothioique.

12. Composition agricole comprenant un diluant, un agent tensio-actif ou un mélange de ceux-ci et une quantité efficace d'un pesticide, caractérisé en ce que le pesticide comprend un composé selon l'une quelconque des revendications 1 à 11.

13. Procédé de lutte contre les arthropodes nuisibles, par application, au lieu à protéger, d'une quantité efficace d'un composé pesticide, caractérisé en ce que le composé pesticide comprend un composé selon l'une des revendications 1 à 11.

14. Procédé selon la revendication 13, dans lequel on lutte contre un insecte nuisible dans un lieu agricole, horticole ou forestier.

15. Procédé selon la revendication 13, dans lequel on lutte contre un arthropode nuisible sur un animal.

16. Procédé de lutte contre les nématodes par application, au lieu à protéger, d'une quantité efficace d'un composé nématocide, caractérisé en ce que le composé nématocide comprend un composé selon l'une quelconque des revendications 1 à 11.

17. Un procédé de préparation d'un composé selon la revendication 1, qui comprend:

(a) la mise en contact, en présence d'un accepteur d'acide, de

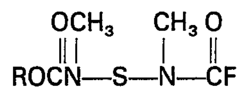

et de

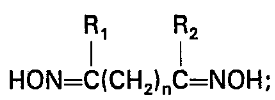

ou

(b) la mise en contact dans un solvant aprotique ou dans un mélange d'eau et de solvant organique non miscible, en présence d'un catalyseur de transfert de phase; de

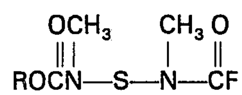

et de

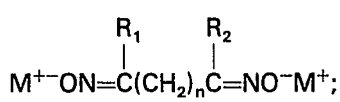

ou

(c) la mise en contact, en présence d'un accepteur d'acide de

ROH

et

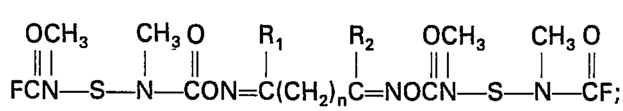

ou

(d) la mise en contact de:

$RO^-M^+$

et de

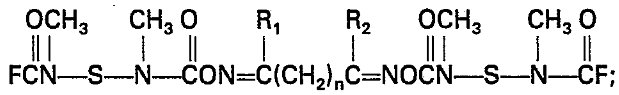

$R_1$ et $R_2$ étant tel que défini à la revendication 1 et M étant un métal alcalin, dans chacun des procédés ci-dessus.

**Revendications pour l'Etat Contractant: AT**

1. Un procédé de préparation d'un composé de la formule

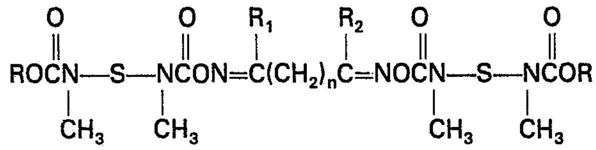

(I)

dans laquelle:

R est

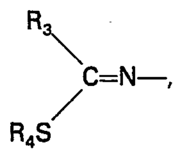, 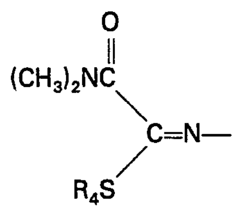 ou 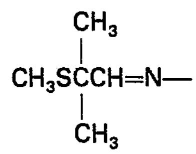

$R_1$ est l'hydrogène, un groupe alkyle en $C_1$ à $C_4$, cycloalkyle en $C_5$ à $C_6$, alkylthio en $C_1$ à $C_3$, le chlore, un groupe chlorométhyle,

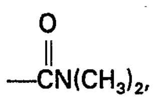, 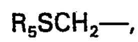, 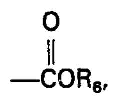,

phényle, ou phényle substitué par un groupe alkyle en $C_1$ à $C_4$;

$R_2$ est l'hydrogène, un groupe alkyle en $C_1$ à $C_4$, cycloalkyle, le chlore, un groupe alkylthio en $C_1$ à $C_3$, phényle ou phényle substitué par un groupe alkyle en $C_1$ à $C_4$;

$R_1$ et $R_2$ peuvent être réunis pour former un pont carbocyclique de 3 à 5 atomes de carbone ou un pont de la formule $—SCH_2CH_2S—$;

$R_3$ est un groupe alkyle en $C_1$ à $C_3$;

$R_4$ est un groupe alkyle en $C_1$ à $C_3$;

$R_5$ est un groupe alkyle en $C_1$ à $C_3$;

$R_6$ est un groupe alkyle en $C_1$ à $C_6$, et

$n$ vaut 0, 1 ou 2;

avec la condition que n=0 lorsque:

1) $R_1$ est un groupe chlorométhyle ou $R_5SCH_2$, ou

2) lorsque $R_1R_2$ sont réunis pour former un pont carbocyclique ou un pont de formule $—SCH_2CH_2S—$, ou

3) lorsque au moins un de $R_1$ et $R_2$ est un groupe alkylthio;

et avec la condition que, lorsque n=0, l'un de $R_1$ et $R_2$ ne peut pas être H quand l'autre est un groupe phényle ou phényle substitué par un groupe alkyle en $C_1$ à $C_4$; et avec la condition aussi que, lorsque n=1, $R_1$ et $R_2$ ne peuvent pas être tous deux des groupes t-butyle, phényle, phényle substitués par un groupe alkyle en $C_1$ à $C_4$ ni des combinaisons quelconques de ceux-ci; ce procédé comprenant:

(a) la mise en contact, en présence d'un accepteur d'acide, de

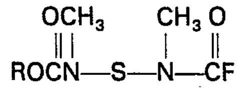

et de

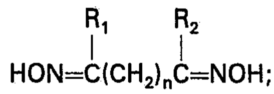

(b) la mise en contact dans un solvant aprotique ou dans un mélange d'eau et de solvant organique non miscible, en présence d'un catalyseur de transfert de phase, de

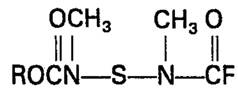

et de

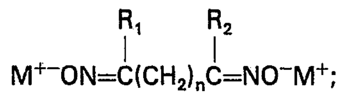

ou

(c) la mise en contact, en présence d'un accepteur d'acide de

ROH

et

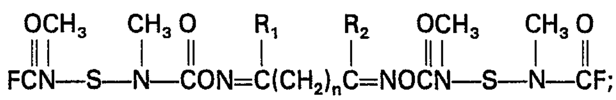

ou

(d) la mise en contact de

$RO^-M^+$

et de

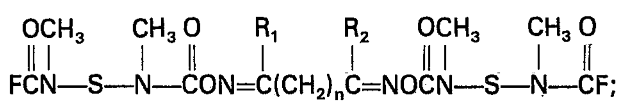

$R_1$ et $R_2$ étant tel que défini ci-dessus et M étant un métal alcalin, dans chacun des procédés ci-dessus.

2. Un procédé selon la revendication 1, dans lequel $R_3$ est $CH_3$.

3. Un procédé selon la revendication 1 ou 2, dans lequel $R_1$ et $R_2$ sont indépendamment l'hydrogène, un groupe alkyle en $C_1$ à $C_4$,

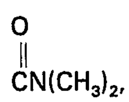

phényle ou phényle substitué par un groupe alkyle en $C_1$ à $C_4$, ou dans lequel $R_1$ et $R_2$ sont réunis pour former un pont carbocyclique de 3 à 5 atomes de carbone.

4. Un procédé selon la revendication 1, 2 ou 3, dans lequel n=0.

5. Un composé selon l'une quelconque des revendications 1 à 4, dans lequel

R est

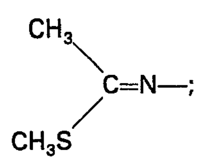

$R_1$ et $R_2$ sont indépendamment l'hydrogène ou un groupe alkyle en $C_1$ à $C_4$, et n=0, avec la condition qu'au moins un de $R_1$ et $R_2$ est autre que l'hydrogène.

6. Un procédé selon la revendication 1, dans lequel le produit est choisi parmi le N,N'-[2,3-butanediylidènebis[nitrilooxycarbonyl(N-méthylimino)thio(N-méthylimino)carbonyloxy]]bis[éthanimidothioate] de diméthyle, le N,N'-[1,2-propanediylidènebis-[nitrilooxycarbonyl(N-méthylimino)thio(N-méthylimino)carbonyloxy]]bis[éthanimidothioate] de diméthyle, le N,N'-[2,4-pentanediylidènebis[nitrilooxycarbonyl(N-méthylimino)thio(N-méthylimino)carbonyloxy]]bis[éthanimidothioate] de diméthyle, le N,N'-[2,5-hexanediylidènebis[nitrilooxycarbonyl(N-méthylimino)thio(N-méthylimino)carbonyloxy]]bis[éthanimidothioate] de méthyle, le diester de l'acide N-méthyl-N-[N-méthyl-N-(2-méthyl-2-méthylthio-propylidèneaminooxycarbonyl)aminothio]carbamique avec la 2,3-butanedionedioxime, et l'ester diméthylique de l'acide N,N'[2,3-butanediylidènebis(nitrilooxycarbonyl)-N-méthylaminothio-(N-méthylimino)carbonyloxy)bis]-2-(diméthylamino)-2-oxoéthanimidothioique.

7. Un procédé de lutte contre les arthropodes nuisibles, par application, au lieu à protéger, d'une quantité efficace d'un composé pesticide, caractérisé en ce que le composé pesticide comprend un composé de formule I tel que défini à l'une quelconque des revendications 1 à 6.

8. Procédé selon la revendication 7, dans lequel on lutte contre un insecte nuisible dans un lieu agricole, horticole ou forestier.

9. Procédé selon la revendication 7, dans lequel on lutte contre un arthropode nuisible sur un animal.

10. Un procédé de lutte contre les nématodes par application, au lieu à protéger, d'une quantité efficace d'un composé nématocide, caractérisé en ce que le composé nématocide comprend un composé de formule (I) tel que défini à l'une quelconque des revendications 1 à 6.

**Patentansprüche für die Vertragsstaaten: BE, CH, DE, FR, GB, IT, LU, NL, SE.**

1. Verbindung mit der Formel

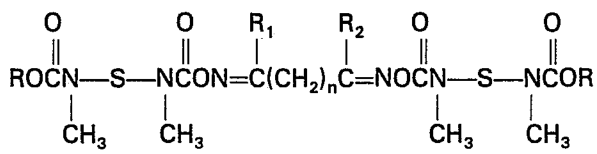

worin R die Bedeutung hat von

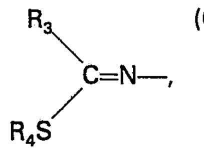, 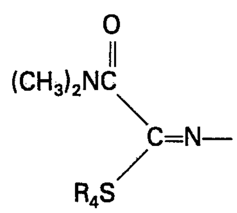 oder 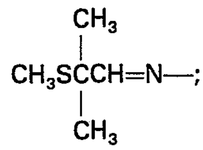;

$R_1$ Wasserstoff, $C_1$—$C_4$ Alkyl, $C_5$—$C_6$ Cycloalkyl, $C_1$—$C_3$ Alkylthio, Chlor, Chlormethyl,

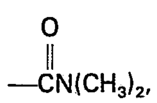, $R_5SCH_2$—, 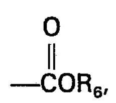,

Phenyl oder Phenyl substituiert mit $C_1$—$C_4$ Alkyl bedeutet,

$R_2$ Wasserstoff, $C_1$—$C_4$ Alkyl, $C_5$—$C_6$ Cycloalkyl, Chlor, $C_1$—$C_3$ Alkylthio, Phenyl oder Phenyl substituiert durch $C_1$—$C_4$ Alkyl ist;

$R_1$, $R_2$ zusammen eine carbocyclische Brücke von drei bis fünf Kohlenstoffatomen oder eine Brücke der Formel —$SCH_2CH_2S$— bilden können;

$R_3$ $C_1$—$C_3$ Alkyl ist;

$R_4$ $C_1$—$C_3$ Alkyl ist;

$R_5$ $C_1$—$C_3$ Alkyl ist;

$R_6$ $C_1$—$C_6$ Alkyl ist; und

n 0, 1 oder 2 ist;

1) vorausgesetzt, daß n 0 ist, wenn $R_1$ Chlormethyl oder $R_5$ $SCH_2$ ist, oder

2) vorausgesetzt, daß n 0 ist, wenn $R_1R_2$ zusammen eine carbocyclische Brücke oder eine Brücke der Formel —$SCH_2CH_2S$— bilden, oder

3) vorausgesetzt, daß n 0 ist, wenn mindestens einer von $R_1$ und $R_2$ Alkylthio ist;

und vorausgesetzt, daß, wenn n 0 ist, einer von $R_1$ und $R_2$ nicht H sein kann, wenn der andere Phenyl oder Phenyl substituiert durch $C_1$—$C_4$ Alkyl ist;

und weiter vorausgesetzt, daß wenn n 1 ist, $R_1$ und $R_2$ nicht beide t-Butyl, Phenyl, Phenyl substituiert durch $C_1$—$C_4$ Alkyl oder jegliche Kombination davon sein können.

2. Verbindung nach Anspruch 1, worin $R_3$ $CH_3$ ist.

3. Verbindung nach Anspruch 1 oder 2, worin $R_1$ und $R_2$ unabhängig Wasserstoff, $C_1$—$C_4$ Alkyl,

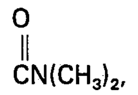

Phenyl oder Phenyl-substituiert durch $C_1$—$C_4$ Alkyl sind oder worin $R_1$ und $R_2$ zusammen eine carbocyclische Brücke mit 3 bis 5 Kohlenstoffatomen bilden.

4. Verbindung nach Anspruch 1, 2 oder 3, worin n 0 ist.

5. Verbindung nach einem der Ansprüche 1 bis 4, worin R die Bedeutung hat von

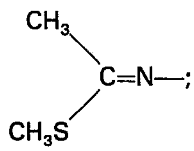

$R_1$ und $R_2$ unabhängig Wasserstoff oder $C_1$—$C_4$ Alkyl sind; und n 0 ist; vorausgesetzt, daß mindestens einer von $R_1$ und $R_2$ von Wasserstoff unterschiedlich ist.

6. Dimethyl-N,N'-[2,3-butandiylidenbis-[nitrilooxycarbonyl-(N-methylimino)-thio-(N-methylimino)-carbonyloxy]]-bis-[äthanimidothioat].

7. Dimethyl-N,N'-[1,2-propandiylidenbis-[nitrilooxycarbonyl-(N-methylimino)-thio-(N-methylimino)-carbonyloxy]]-bis-[äthanimidothioat].

8. Dimethyl-N,N'-[2,4-pentandiylidenbis-[nitrilooxycarbonyl-(N-methylimino)-thio-(N-methylimino)-carbonyloxy]]-bis-[äthanimidothioat].

9. Dimethyl-N,N'-[2,5-hexandiylidenbis-[nitrilooxycarbonyl-(N-methylimino)-thio-(N-methylimino)-carbonyloxy]]-bis-[äthanimidothioat].

10. N-Methyl-N-[N-methyl-N-(2-methyl-2-methylthiopropylidenaminooxycarbonyl)-aminothio]-carbaminsäure, Diester mit 2,3-Butandion, Dioxim.

11. N,N'-[2,3-Butandiylidenbis-[nitrilooxycarbonyl-(N-methylaminothio-(N-methylimino)-carbonyloxy]-bis]-2-(dimethylamino)-2-oxoäthanimidothiosäure, Dimethylester.

12. Landwirtschaftliche Zusammensetzung, enthaltend ein Verdünnungsmittel, oberflächenaktives Mittel oder Gemisch davon, und eine wirksame Menge eines Pestizids, dadurch gekennzeichnet, daß das Pestizid eine Verbindung gemäß einem der Ansprüche 1 bis 11 umfaßt.

13. Verfahren zur Bekämpfung von schädlichen Arthropoden durch Auftrag auf einen zu schützenden Ort von einer wirksamen Menge einer pestiziden Verbindung, dadurch gekennzeichnet, daß die pestizide Verbindung eine Verbindung gemäß einem der Ansprüche 1 bis 11 umfaßt.

14. Verfahren nach Anspruch 13, bei dem ein Insektenschädling an einem landwirtschaftlichen, gartenbaulichen oder forstwirtschaftlichen Ort bekämpft wird.

15. Verfahren nach Anspruch 13, bei dem ein Arthropodenschädling an einem Tier bekämpft wird.

16. Verfahren zur Bekämpfung von Nematoden durch Auftrag auf einen zu schützenden Ort von einer wirksamen Menge einer nematiziden Verbindung, dadurch gekennzeichnet, daß diese nematizide Verbindung eine Verbindung gemäß einem der Ansprüche 1 bis 11 enthält.

17. Verfahren zur Herstellung einer Verbindung nach Anspruch 1, durch

a) Kontakt in Anwesenheit eines Säureakzeptors von

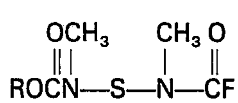

und

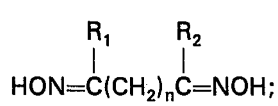

oder

b) Kontakt in einem aprotischen Lösungsmittel; oder in einem Wasser/nichtmischbares organisches Lösungsmittel-Gemisch in Anwesenheit eines Phasentransferkatalysators von:

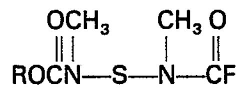

und

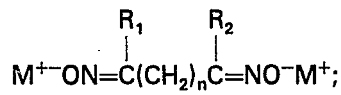

oder

c) Kontakt in Anwesenheit eines Säureakzeptors von

ROH

und

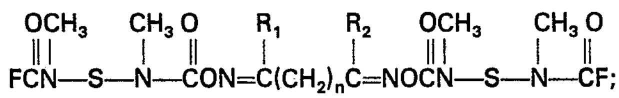

oder

d) Kontakt von

$RO^-M^+$

und

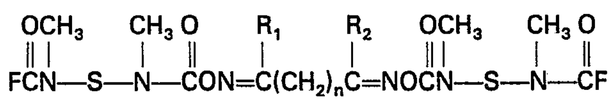

worin in jedem der vorstehenden Verfahren R, $R^1$ und $R^2$ wie in Anspruch 1 definiert sind, und M Alkalimetall ist.

**Patentansprüche für den Vertragsstaat: AT**

1. Verfahren zur Herstellung einer Verbindung mit der Formel

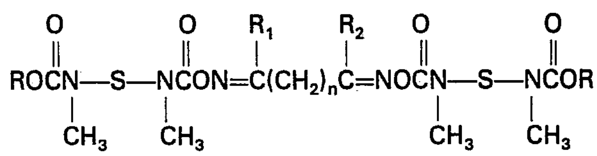

(I)

worin

R die Bedeutung hat von

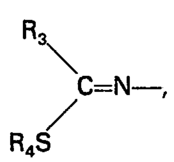 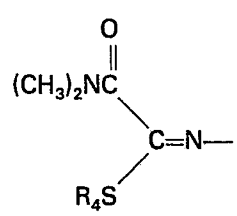 oder 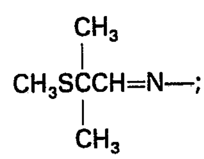

$R_1$ Wasserstoff, $C_1$—$C_4$ Alkyl, $C_5$—$C_6$ Cycloalkyl, $C_1$—$C_3$ Alkylthio, Chlor, Chlormethyl,

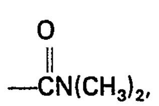 $R_5SCH_2$—, 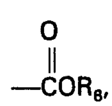

Phenyl oder Phenyl substituiert durch $C_1$—$C_4$ Alkyl ist;

$R_2$ Wasserstoff, $C_1$—$C_4$ Alkyl, $C_5$—$C_8$ Cycloalkyl, Chlor, $C_1$—$C_3$ Alkylthio, Phenyl oder Phenyl substituiert durch $C_1$—$C_4$ Alkyl ist;

$R_1$, $R_2$ zusammen eine carbocyclische Brücke mit 3 bis 5 Kohlenstoffatomen oder eine Brücke der Formel —$SCH_2CH_2S$— bilden können;

$R_3$ $C_1$—$C_3$ Alkyl ist;

$R_4$ $C_1$—$C_3$ Alkyl;

$R_5$ $C_1$—$C_3$ Alkyl ist;

$R_6$ $C_1$—$C_6$ Alkyl ist; und

n 0, 1 oder 2 ist;

1) vorausgesetzt, daß n 0 ist, wenn $R_1$ Chlormethyl oder $R_5SCH_2$ ist, oder

2) vorausgesetzt, daß n 0 ist, wenn $R_1R_2$ zusammen eine carbocyclische Brücke oder eine Brücke mit der Formel —$SCH_2CH_2S$— bilden; oder

3. vorausgesetzt, daß n 0 ist, wenn mindestens einer von $R_1$ und $R_2$ Alkylthio ist;

und vorausgesetzt, daß, wenn n 0 ist, einer von $R_1$ und $R_2$ nicht H sein kann, wenn der andere Phenyl oder Phenyl substituiert durch $C_1$—$C_4$ Alkyl ist;

und weiter vorausgesetzt, daß, wenn n 1 ist, $R_1$ und $R_2$ nicht beide t-Butyl, Phenyl, Phenyl substituiert durch $C_1$—$C_4$ Alkyl oder jegliche Kombination davon sein können;

durch

a) Kontakt in Anwesenheit eines Säureakzeptors von

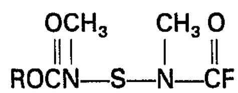

und

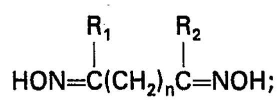

oder

b) Kontakt in einem aprotischen Lösungsmittel; oder in einem Wasser/nichtmischbares organisches Lösungsmittel-Gemisch in Anwesenheit eines Phasentransferkatalysators von

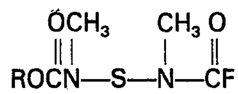

und

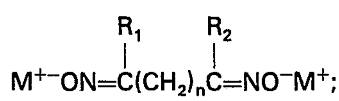

oder

c) Kontakt in Anwesenheit eines Säureakzeptors von

ROH

und

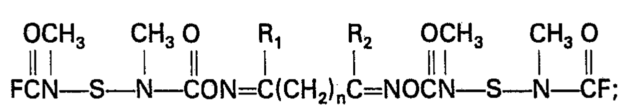

oder

d) Kontakt von

$RO^-M^+$

und

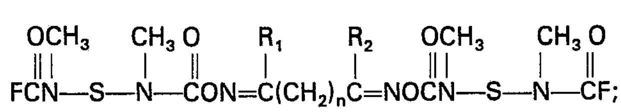

worin in jedem der vorstehenden Verfahren R, $R_1$ und $R_2$ wie vorstehend definiert sind, und M Alkalimetall ist.

2. Verfahren nach Anspruch 1, worin $R_3$ $CH_3$ ist.

3. Verfahren nach Anspruch 1 oder 2, worin $R_1$ und $R_2$ unabhängig Wasserstoff, $C_1$—$C_4$ Alkyl,

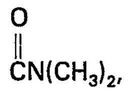

Phenyl oder Phenyl substituiert durch $C_1$—$C_4$ Alkyl ist, oder worin $R_1$ und $R_2$ zusammen eine carbocyclische Brücke mit 3 bis 5 Kohlenstoffatomen bilden.

4. Verfahren nach Anspruch 1, 2 oder 3, worin n 0 ist.

5. Verfahren nach einem der Ansprüche 1 bis 4, worin R die Bedeutung hat von

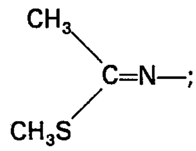

$R_1$ und $R_2$ unabhängig Wasserstoff oder $C_1$—$C_4$ Alkyl sind; und n 0 ist;

vorausgesetzt, daß mindestens einer von $R_1$ und $R_2$ von Wasserstoff unterschiedlich ist.

6. Verfahren nach Anspruch 1, in dem das Produkt ausgewählt ist aus

Dimethyl,N,N′ - [2,3-butandiylidenbis-[nitrilooxycarbonyl-(N-methylimino)-thio-(N-methylimino)-carbonyloxy]]-bis-[äthanimidothioat];

Dimethyl-N,N′-[1,2-propandiylidenbis-[nitrilooxycarbonyl-(N-methylimino)-thio-(N-methylimino)-carbonyloxy]]-bis-[äthanimidothioat];

Dimethyl-N,N′-[2,4-pentandiylidenbis-[nitrilooxycarbonyl-(N-methylimino)-thio-(N-methylimino)-carbonyloxy]]-bis-[äthanimidothioat];

Dimethyl - N,N′-[2,5-hexandiylidenbis-[nitrilooxycarbonyl-(N-methylimino)-thio-(N-methylimino)-carbonyloxy]]-bis-[äthanimidothioat];

N - Methyl-N-(N-methyl-N-(2-methyl-2-methylthiopropylidenaminooxycarbonyl)-aminothio]-carbaminsäure, Diester mit 2,3-Butandion, Dioxim; und

N,N′ - [2,3-Butandiylidenbis-[nitrilooxycarbonyl-(N-methylaminothio-(N-methylimino)-carbonyloxy]-bis]-2-(dimethylamino)-2-oxoäthanimidothiosäure, Dimethylester.

7. Verfahren zur Bekämpfung von schädlichen Arthropoden durch Auftrag auf einen zu schützenden Ort von einer wirksamen Menge einer pestiziden Verbindung, dadurch gekennzeichnet, daß die pestizide Verbindung eine Verbindung der Formel I, definiert in einem der Ansprüche 1 bis 6, umfaßt.

8. Verfahren nach Anspruch 7, dadurch gekennzeichnet, daß ein Insektenschädling an einem landwirtschaftlichen, gartenbaulichen oder forstwirtschaftlichen Ort bekämpft wird.

9. Verfahren nach Anspruch 7, bei dem ein Arthropodenschädling an einer Stelle eines Tieres bekämpft wird.

10. Verfahren zur Bekämpfung von Nematoden durch Auftrag auf eine zu schützende Stelle von einer wirksamen Menge einer nematiziden Verbindung, dadurch gekennzeichnet, daß die nematizide Verbindung eine Verbindung der Formel I gemäß einem der Ansprüche 1 bis 6 umfaßt.